# EUROPEAN PATENT SPECIFICATION

(11) **EP 4 617 540 B1**
(45) Date of publication and mention of the grant of the patent: **09.12.2026**
(21) Application number: 24163263.7
(22) Date of filing: 13.03.2024
(51) Int. Cl.: F16L 33/207

(54) **PRESS FITTING FOR A PIPE CONNECTION AND MANUFACTURING METHOD**
PRESSFITTING FÜR EINE ROHRVERBINDUNG UND HERSTELLUNGSVERFAHREN
RACCORD À SERTIR POUR RACCORD DE TUYAUX ET PROCÉDÉ DE FABRICATION

(43) Date of publication of application: 17.09.2025
(73) Proprietor: Uponor Innovation AB, 737 61 Virsbo (SE)
(72) Inventor: Talonpoika, Ismo, 15561 Nastola (FI); Tomminen, Aleksis, 15561 Nastola (FI); Uosukainen, Mika, 15561 Nastola (FI); Hämäläinen, Janne, 15561 Nastola (FI); Heino, Juha, 15561 Nastola (FI); Holopainen, Aki, 15561 Nastola (FI); Määttä, Suvi, 15561 Nastola (FI); Gallo, Pasquale, 15561 Nastola (FI); Rotso, Vesa, 15561 Nastola (FI); Kauppinen, Tuomas, 15561 Nastola (FI); Ross, Andreas, 97437 Hassfurt (DE); Schirrmeister, Kevin, 97437 Hassfurt (DE); Dittmar, Rainer, 97437 Hassfurt (DE)
(74) Representative: Fenner, Seraina

(56) References cited:
- EP-A1- 2 677 223
- DE-U1- 202006 010 323
- US-A1- 2020 378 530
- US-A1- 2021 364 111

## Description

The present disclosure relates to a press fitting for a pipe connection, comprising a fitting body for connecting the press fitting to a pipe, a press sleeve comprising a substantially cylindrical press area, and a stop ring interconnecting the press sleeve and the fitting body. The present disclosure further relates to a manufacturing method.

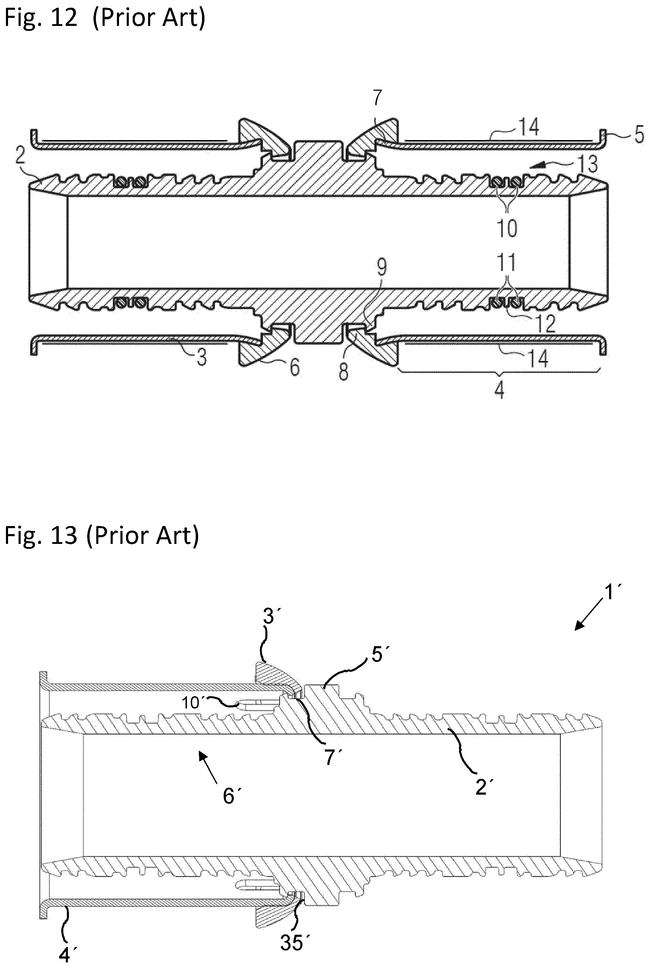

Such press fittings are generally known. For example, patent application US 2021/364111 A1 discloses a press fitting of the above type, whose cross-section is shown in Figure 12. The press sleeve 3 of the disclosed press fitting 1 comprises at least one projecting element in form of a flange 5, which delimits the substantially cylindrical press area 4 in an axial direction at its distal or open end. The press fitting 1 further comprises a banderole 14, which surrounds the substantially cylindrical press area 4 of the press sleeve 3, wherein the tubular banderole 14 is at least partially destroyed when the press sleeve 3 is pressed with a pressing tool. To ensure that the formed connection is watertight, a pressing profile 13 of a fitting body 2 comprises two recesses 10 for holding a sealing ring 11 each, which are separated by a web 12. As can be seen in Figure 12, the press sleeve 3 is attached by means of a retaining ring 6 to the fitting body 2. For this purpose, an expanded area 7 of the press sleeve 3 is inserted into a corresponding undercut formed in the retaining ring 6, and a locking lug 8 of the retaining ring 6 interlocks with a corresponding locking lug 9 of the fitting body 2.

An alternative design for a press fitting is known from patent application US 2023/0110392 A1. As disclosed therein and shown in Figure 13, the press fitting 1' comprises a fitting body 2', a press sleeve 4' arranged in a connection area 6' and a stop ring 3' fixed to the press sleeve 4' and limiting a pressing area in an axial direction of the press sleeve 4' at its proximal or fitting-side end facing an end face 35' of a central area 5' of the fitting body 2'. As shown in Figure 13, the press sleeve 4' interlocks directly with a corresponding groove 7' of the fitting body 2'. To limit the force required for pressing the press sleeve 4' onto the fitting body 2', the press sleeve 4' comprises several slots 10'.

While the known press fittings provide many advantages, the specific interconnection between the press sleeve and the fitting body may be difficult to form and may result in high forces during assembly of the fitting. For example, the insertion of the press sleeve 3 shown in Figure 12 into the corresponding undercut of the retaining ring 6 requires a relatively high assembly force and may damage the retaining ring 6. Moreover, it may be difficult to manufacture a retaining ring with an undercut deep enough to firmly hold the press sleeve 3 in place. In the alternate design shown in Figure 13, the mounting forces for attaching the press sleeve 4' directly to the fitting body 2' are also relatively high. Moreover, the provision of the slots 10 in the press sleeve 4' may require an additional manufacturing step.

Accordingly, it is a challenge to provide alternative designs for press fittings and corresponding manufacturing methods which address at least some of the above issues.

In this context, a press fitting for a pipe connection with a novel design is provided. The press fitting comprises a fitting body for connecting the press fitting to a pipe, a press sleeve, and a stop ring. The press sleeve comprises a substantially cylindrical press area and an outward expanding first collar at a first end of the press sleeve. The stop ring interconnects the press sleeve and the fitting body. The stop ring comprises an inner clamp ring and a separate, outer compression ring. The clamp ring comprises a groove and a lip, the groove being formed at an inner contour of the clamp ring and being configured for accommodating the outward expanding first collar of the press sleeve, and the lip being arranged, in an insertion direction of the press sleeve, in a first part of the clamp ring in front of the groove. The compression ring is configured to compress the first part of the clamp ring in an assembled state of the stop ring, wherein the compression ring is placed over an outer contour of the clamp ring.

Accordingly, an improved design for a press fitting is provided. Provision of a stop ring with two separate parts reduces the mounting forces required to insert the press sleeve into the stop ring. This is facilitated, at least in part, by the provision of a lip in a first area of an inner clamp ring, which can move outwards during insertion of the first collar into a groove of the clamp ring, before the first part is compressed by a separate compression ring placed over an outer contour of the clamp ring. At the same time, the strength of the connection between the stop ring and the press sleeve is increased, i.e., a tighter connection is formed, by pushing parts of the inner clamp ring firmly against the press sleeve after the outer compression ring has been attached. Note that this design also mitigates problems of previous stop ring designs associated with tolerances in a depth of an undercut for holding a collar of a press sleeve.

Optionally, the compression ring is configured to press the lip of the clamp ring against an outer surface of the press sleeve for creating a form-fit connection between the first end of the press sleeve and the stop ring in the assembled state. Such a form-fit connection implements a particular strong connection between the stop ring and the press sleeve.

Optionally, the lip comprises a first protrusion formed at the inner contour of the clamp ring and delimiting the groove in the insertion direction of the press sleeve to form a first undercut. Provision of a first protrusion forming an undercut enlarges the contact area between the stop ring and the press sleeve.

Optionally, a recess angle of the protrusion is increased when the compression ring is placed over the outer contour of the clamp ring. For example, the recess angle of the protrusion may lie in the range of 40 to 60° prior to placing the compression ring over the outer contour of the clamp ring. For example, the recess angle of the protrusion may lie in the range of 60 to 80° in the assembled state. The selection of the above angles enables to slip the first collar into the clamp ring without damaging it. At the same time, the relatively steep recess angle results in a high pullout force required to separate the press sleeve from the stop ring, thereby holding the sleeve group firmly together.

Optionally, a depth of the undercut lies in the range of 0.30 to 1.0 mm in the assembled state, in particular for a press fitting for a pipe having a diameter of 16 or 32 mm. An undercut of a corresponding depth can be obtained by injection molding using the above design features of the disclosed stop ring. It enables a firm connection between the stop ring and the press sleeve of the sleeve group. In a corresponding one-part design, the undercut would need to be much smaller, e.g., lie in the range of 0.1 to 0.2 mm for the same fitting diameter.

Optionally, the lip forms at least one snap element for creating a snap-fit connection between the outward expanding first collar of the press sleeve and the clamp ring prior to placing the compression ring over the outer contour of the clamp ring. The use of a snap-fit connection implemented by means of at least one snap element provides an easy and reliable connection of the clamp ring to the press sleeve.

Optionally, the lip is segmented in the circumferential direction by multiple first cut-outs into a plurality of snap elements. The provision of multiple snap elements separated by corresponding cutouts further reduces the insertion forces during assembly of the fitting. Moreover, in case the clamp ring is formed by injection molding, the first cut-outs also result in a lower core pullout force for removal of a one-part core of a mold used for injection molding. These advantages are achieved by the fact that the individual snap elements can move independently of each other, thereby facilitating a simple and effective widening of the inner diameter of the first part of the clamp ring during insertion and removal.

Optionally, the outer contour of the clamp ring has a conical shape with a wider outside diameter in the area of a front face of the stop ring facing the press sleeve in the assembled state. Alternatively or in addition, an inner contour of the compression ring has a conical shape with a wider inside diameter in the area of the front face of the stop ring. Provision of such a conical contact area between the clamp ring and the compression ring, e.g., with a diameter changing continuously, for example increasing linearly, from a front face to a corresponding rear face of the clamp ring or the compression ring, facilitates easy placement of the compression ring on the clamp ring and results in a steady increase in the compression force as the compression ring is pushed towards the front of the clamp ring.

Optionally, the compression ring further comprises a protrusion for forming a second undercut, the protrusion being configured lock the compression ring at the outer contour of the clamp ring in the assembled state. Such a protrusion may be used to clip the compression ring onto a corresponding edge of the clamp ring, such as an upper edge of its front face or a correspond step or groove.

Optionally, the stop ring further comprises one or more snaps hooks, in particular one or more snaps hooks formed in a second part of the clamp ring, the one or more snap hooks being configured to connect the clamp ring to a corresponding protrusion of the fitting body. The provision of snap hooks at the stop ring, in particular in a part of the clamp ring behind the groove for accommodating the first collar, enables to form a snap-fit connection between the stop ring or a part of it and the fitting body. In particular, the provision of snap hooks enables to clip an assembled sleeve group comprising the two-part stop ring with a relatively low mounting force into a corresponding groove of the fitting body.

Optionally, a second part of the clamp ring is segmented in the circumferential direction by multiple second cut-outs into a plurality of snap hooks. As detailed above with regard to the segmented snap elements, the provision of multiple snap hooks separated by second cutouts further reduces the mounting force required during the assembly of the fitting in that the inside diameter of the second part of the clamp ring can be easily widened.

Optionally, the one or more snap hooks comprise a centering step for positioning the stop ring on the fitting body. Accordingly, the press sleeve can be attached to the fitting body in a coaxial manner at a well-defined position.

Optionally, the outward expanding first collar of the press sleeve has an opening angle in the range of 60 to 90°. For example, the outward expanding first collar of the press sleeve may be configured as a flange. Such a relatively opening steep guiding angle results in a good interlocking between the press sleeve and the stop ring.

Optionally, a radius of a kink or bend between the substantially cylindrical press area and the outward expanding first collar lies in the range of 0.5 to 1.0 mm. Such a sharp bend provides a good interlocking of the collar in the assembled stop ring.

Optionally, the press sleeve further comprises at least one of an inspection window and a punch mark formed in the substantially cylindrical press area. Provision of an inspection window enables a visual inspection of the insertion of a pipe into the press fitting. Provision of a punch mark formed in the substantially cylindrical press area enables a pipe, which is inserted into the press sleeve, to be held in place until the press sleeve is actually pressed to form a permanent connection.

Optionally, the press sleeve further comprises an outward expanding second collar, in particular a flange, formed at a second end of the press sleeve. Provision of a second collar enables a pressing jaw of a tool for pressing the press sleeve to be guided.

Optionally, the clamp ring is made from a first plastic material, in particular a thermoplastic material such as polyoxymethylene (POM), polyethylene (PE), or polypropylene (PP). Such materials provide the required strength and are suitable to form the clamp ring, for example, by injection molding.

Optionally, the compression ring is made from a second plastic material, in particular a fiber reinforced plastic material, such as a fiber reinforced polyamide, like PA6 GF30. Such materials provide even higher strength for applying a desired compression force, and are suitable to form the compression ring, for example, by injection molding.

Optionally, the press sleeve is made from a metal material, in particular stainless steel. Such materials provide the required strength and are suitable to form the press sleeve, for example, by deep drawing.

Optionally, the fitting body is made from a metal or plastic material, in particular brass or polyphenylsulfone (PPSU). Such materials provide the required strength, are certified for direct contact with drinking water and are suitable to form the fitting body, for example, by turning or molding, respectively.

Moreover, a manufacturing method, in particular for forming parts or all of the above press fitting for a pipe connection, is provided. The manufacturing method comprises:
- inserting a first end of a press sleeve of a press fitting into an inner contour of a clamp ring to form a snap-fit connection around the first end of the press sleeve, wherein the press sleeve comprises a substantially cylindrical press area and an outward expanding first collar arranged at the first end, and wherein the clamp ring has a groove for accommodating the outward expanding first collar and a lip arranged, in an insertion direction of the press sleeve, in a first part of the clamp ring in front of the groove; and
- placing a separate compression ring over an outer contour of the clamp ring to compress the first part of the clamp ring.

The two-part design of the stop ring also enables an enhanced manufacturing method. In particular, as a first step, the first end of the press sleeve is inserted only into the inner contour of the clamp ring (or, inversely, only the clamp ring is placed on the first end of the press sleeve). At this stage, the relatively thin lip of the clamp ring can still be moved outwards with a relative low force, preventing any damages to the clamp ring. Once the first collar of the press sleeve is arranged in the groove of the clamp ring, the first part of the clamp ring comprising the lip is compressed from the outside by placing the compression ring around the clamp ring, thereby stabilizing and strengthening the stop ring in its assembled state and preventing an unintended removal of the press sleeve from the stop ring. Note that this approach also enables formation of a particularly deep undercut at the inner contour of the clamp ring.

Optionally, the method further comprises attaching the press sleeve to a fitting body of the press-fitting, wherein, during the attaching, one or more flexible hooks of the clamp ring snap-fit around a protrusion of the fitting body, wherein the step of attaching is performed prior or after placing the separate compression ring over the outer contour of the clamp ring. As detailed above, the flexible hooks of the clamp ring facilitate the easy mounting of parts or all of the stop ring or of a complete sleeve group onto a corresponding protrusion of the fitting body using a snap-fit connection with a relatively low mounting force.

Further details and advantages of the disclosed press fitting, its components, such as the two-part stop ring or a preassembled sleeve group, and their manufacturing, are disclosed in the following description of exemplary embodiments as well as the attached set of claims.

Specific embodiments are described with respect to attached set of figures, wherein the same reference signs are used to identify the same or similar components of different embodiments for easier reference.
Figures 1A to 1F show different views of a complete press fitting according to the present disclosure.
Figures 2A and 2B show different views of a press sleeve.
Figures 3A to 3C show different views of a sleeve group.
Figure 4 shows an exploded views of a first two-part stop ring comprising a first clamp ring and a compression ring.
Figures 5A and 5B show different views of the first clamp ring.
Figures 6A and 6B show different views of the compression ring.
Figure 7 shows an exploded views of a second two-part stop ring comprising a second clamp ring and a compression ring.
Figures 8A and 8B show different views of the second clamp ring.
Figures 9A to 9C show cross-sections through parts of a stop ring during and after its assembly.
Figures 10A and 10B show different views of a press sleeve according to a further embodiment.
Figure 11 shows, in a schematic manner, a method for manufacturing a press fitting.
Figures 12 and 13 show two different press fittings according to the prior art.

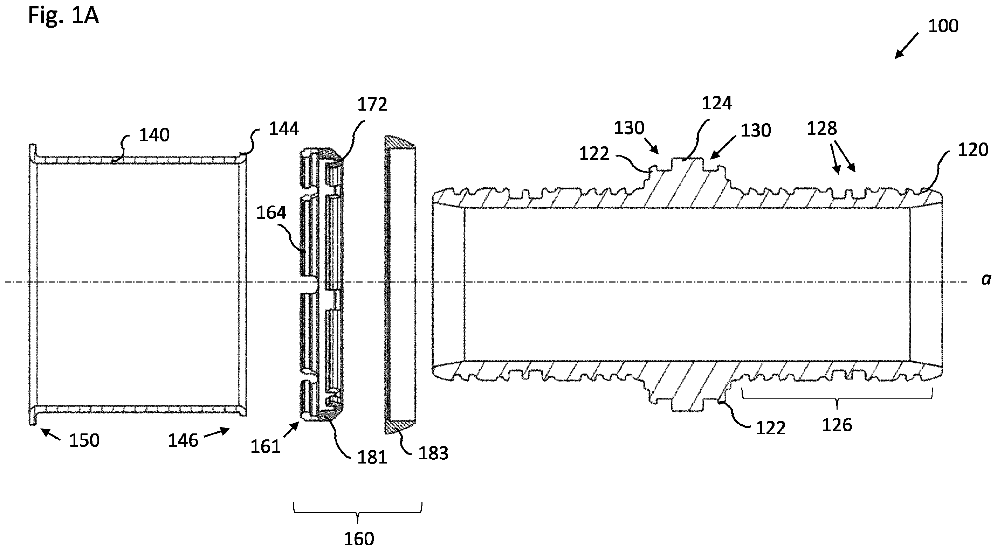

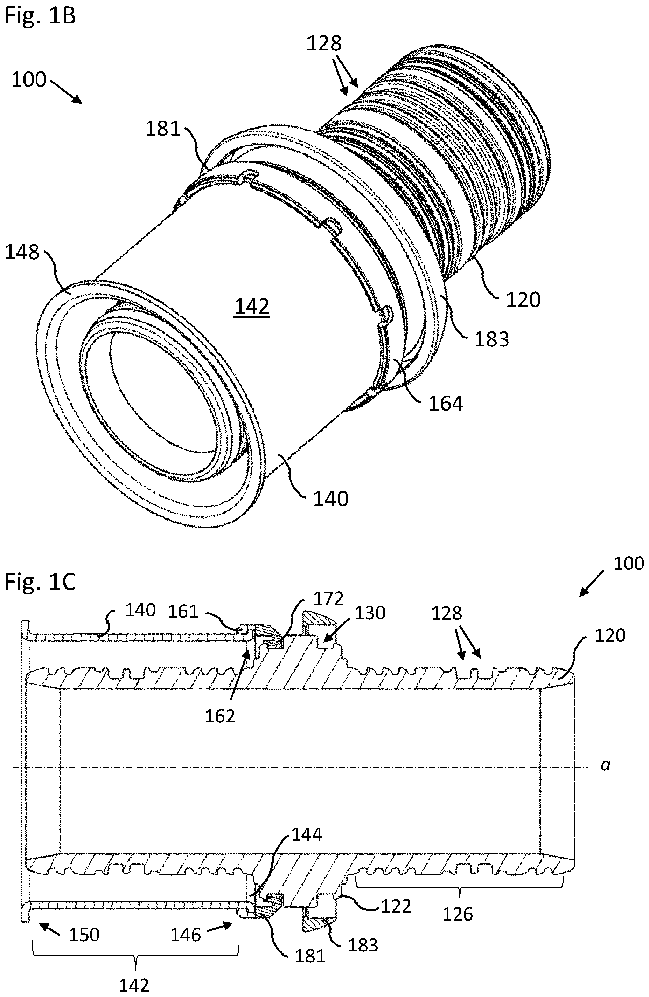

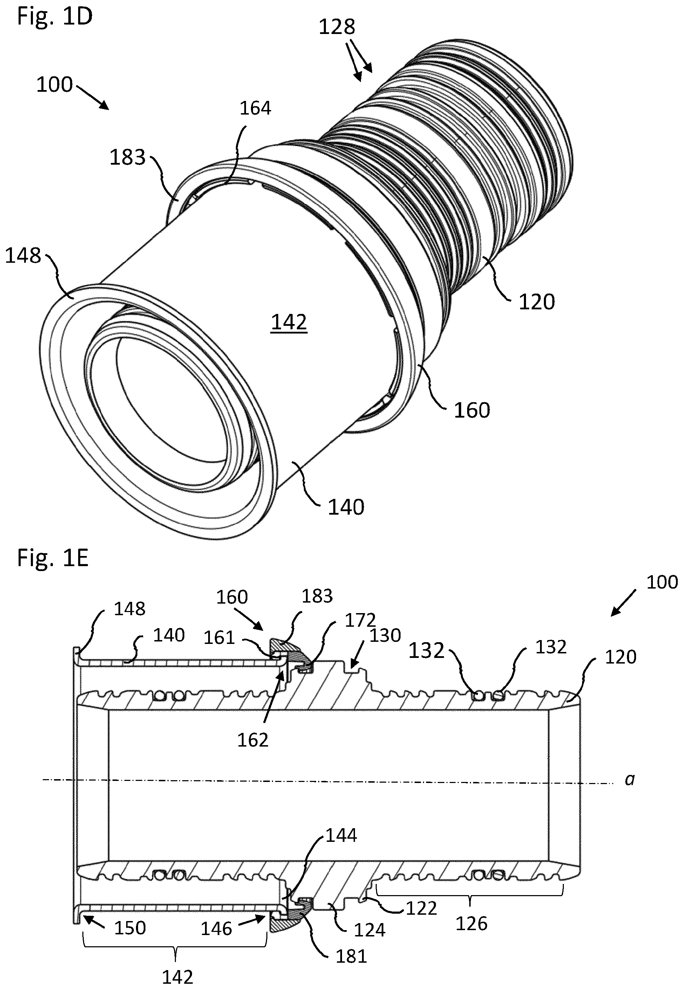

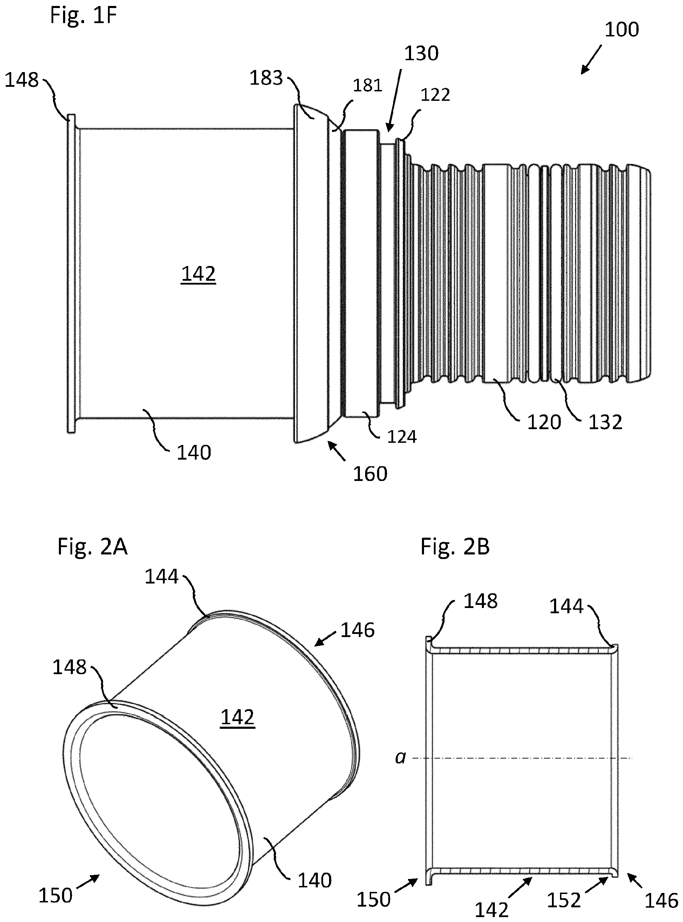

Figures 1A to 1F show different views of a press fitting 100 according to the present disclosure. As can be seen, the press fitting 100 comprises three main components, namely a fitting body 120, a press sleeve 140 and a so-called retaining or stop ring 160. The stop ring 160 in turn comprises two separate parts, an inner clamp ring 181 and an outer compression ring 183.

As best shown in the cross-sections of Figures 1A, 1C and 1E, the exemplary fitting body 120 comprises a central area 124, separating two connection areas at respective ends of the press fitting 100. At each side of the fitting body 120, a sleeve group may be attached. Each sleeve group comprises a press sleeve 140, which has a cylindrical press area 142, and a stop ring 160.

For better understanding, only a single sleeve group with a single press sleeve 140 and a single stop ring 160 is shown in Figures 1A to 1F. In general, however, one press sleeve 140 and one stop ring 160 is provided for each connection area of a fitting body. In the specific embodiment shown in the figures, the fitting body 120 is configured to connect two pipes to each other in a straight line or axial direction a, indicated by the dashed line. Of course, the disclosed fitting design is also applicable to other types of fitting bodies, such as angular or U-shaped connectors, and/or multiway fittings, such as T-fittings or manifolds.

The fitting body 120 comprises, for each sleeve group, a circumferential groove 130 for attaching a corresponding stop ring 160. In the depicted example, the grooves 130 are limited in the axial direction a by the central area 124 and a corresponding protrusion 122 of the fitting body 122.

As also shown in Figures 1A to 1F, the fitting body 120 further comprises various other protrusions and/or grooves forming a pressing profile 126 as generally known from the art. In the exemplary pressing profile 126, two recesses 128 are provided, which may accommodate corresponding sealing rings 132 as shown in Figure 1E.

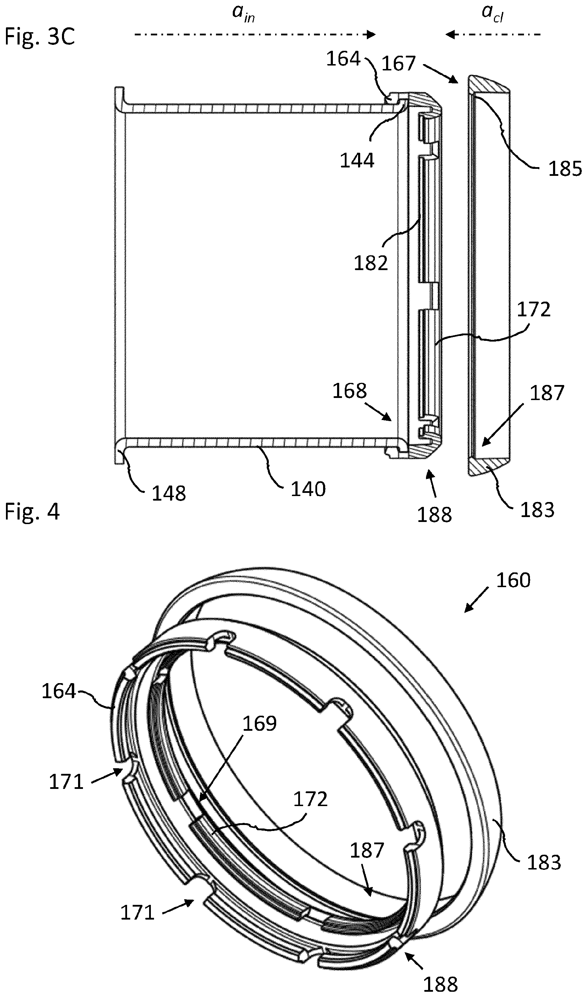

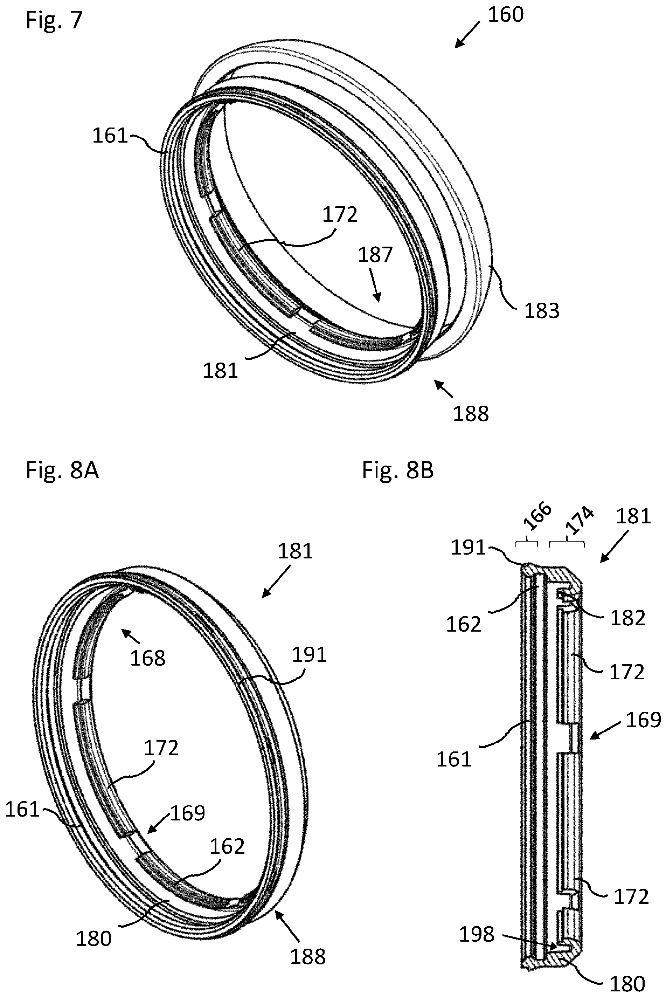

As best seen in Figures 1C and 1E, the press sleeve 140 is held at its proximal or first end 146 by the stop ring 160. For this purpose, the first end 146 of the press sleeve 140 is widened, for example during a deep drawing process of the press sleeve 140, to form an outward expanding collar 144. The collar 144 is positioned in a groove 162 and held by a lip 161 of the clamp ring 181. In the described embodiment, the lip 161 is configured by multiple snap elements 164 arranged in front of the groove 162 as shown in detail in Figures 4 to 6B. In other embodiments, the lip 161 may be configured differently, for example as a continuous ringshaped lip as shown in detail in Figures 7 to 8B.

As explained in more detail later, the stop ring 160 further comprises several snap hooks 172, which interlock with the groove 130 of the fitting body 120. In the depicted embodiment, the snap hooks 172 form part of the clamp ring 181. Alternatively, the snap hooks 172 may form part of the compression ring 183. Accordingly, the press sleeve 140 is attached indirectly to the fitting body 120 by means of the stop ring 160.

Figures 1A to 1F also shows that the press sleeve 140 comprises a second collar in the form of a flange 148 at a distal, second end 150 of the press sleeve 140. Together, the flange 148 and the stop ring 160 limit the press area 142 in both axial directions and may help to position, alone or in combination, a pressing tool (not shown) therein.

Figures 2A and 2B show different views of the press sleeve 140 in isolation. The cross-section shows some geometric details of the first and second collars 144 and 148. For example, it shows that the first and second collars 144 and 148 are configured as flanges, i.e., bend essentially perpendicular to the surface of the cylindrical press area 142. In general, at least the first collar 144 may also have a shallower opening angle, for example in the range of 60 to 90°. In a transition area between the first collar 144 and the pressing area 142, a material of the press sleeve 140, in particular stainless steel, is bent to form a relatively narrow kink 152. In the described example, a bending radius at the area of the kink 142 lies in the range of 0.5 to 1.5 mm.

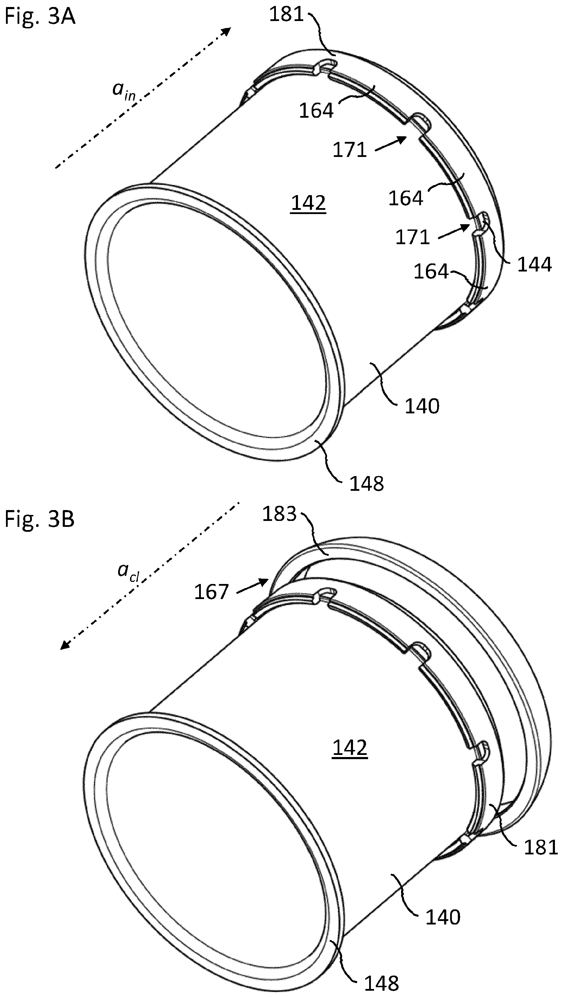

Figures 3A to 3C shows a corresponding sleeve group 200 during and after assembly. The sleeve group 200 comprises the press sleeve 140 as well as the clamp ring 181 and the compression ring 183 of the stop ring 160.

In the view shown in Figure 3A, the clamp ring 181 has already been attached to the press sleeve 140 by inserting the first end 146 with the collar 144 in an insertion direction *aᵢₙ* into the clamp ring 181. During inserting, the snap elements 164 forming the lip 161 are pushed outwards by the first collar 144. Once the collar 144 of the press sleeve 140 has been inserted into the groove 162 as shown in Figure 3A, the snap elements 164 flex back towards their original position and act as snap elements for holding the clamp ring 181 in place.

In the view shown in Figure 3B, a compression ring 183 is about to be pushed over the clamp ring 181 from its back side, i.e., the proximal side facing towards the central area 124 of the fitting body 120 in the mounted state. In other words, a front face 167 of the compression ring 183 facing towards the press area 142 of the press sleeve is pushed in a clamping direction *a_{cl}* towards the rest of the partially assembled sleeve group 200.

As shown in Figure 3C, the clamping direction *a_{cl}* and the insertion direction *aᵢₙ* are opposite to each other. Moreover, an inner contour 168 of the clamp ring 181 prevents that the widened first collar 144 slips through the clamp ring 181. Accordingly, the compression ring 183 can be placed on the first end 146 of the press sleeve 140 with the clipped-on clamp ring 181. Once it is firmly placed on an outer contour 188 of the clamp ring 181, it compresses the clamp elements 164, such that they press against the outer surface of the press sleeve 140.

As also shown in Figure 3C, the compression ring 183 comprises a protrusion 185 forming an undercut at an inner contour 187 of the compression ring 183. The protrusion 185 interlocks with a corresponding edge of the clamp ring 181 to hold it in place, thus forming the stop ring 160.

Further attention is drawn to the fact that the first collar 144 has a sharp end, produced, for example, by a cutting of a metal material used for deep drawing the press sleeve 140. In particular, the first collar 144 does not have any chamfer. Provision of such a relatively sharp end of the first collar 144 improves the interlocking between the press sleeve 140 and the groove 162 as shown, for example, in Figure 3C. However, in another embodiment the first collar 144 may also have a small chamfer or radius, i.e., a less sharp end.

Figures 4 and 5A to 6B show various details of a first clamp ring 181 and a compression ring 183 forming a first stop ring 160.

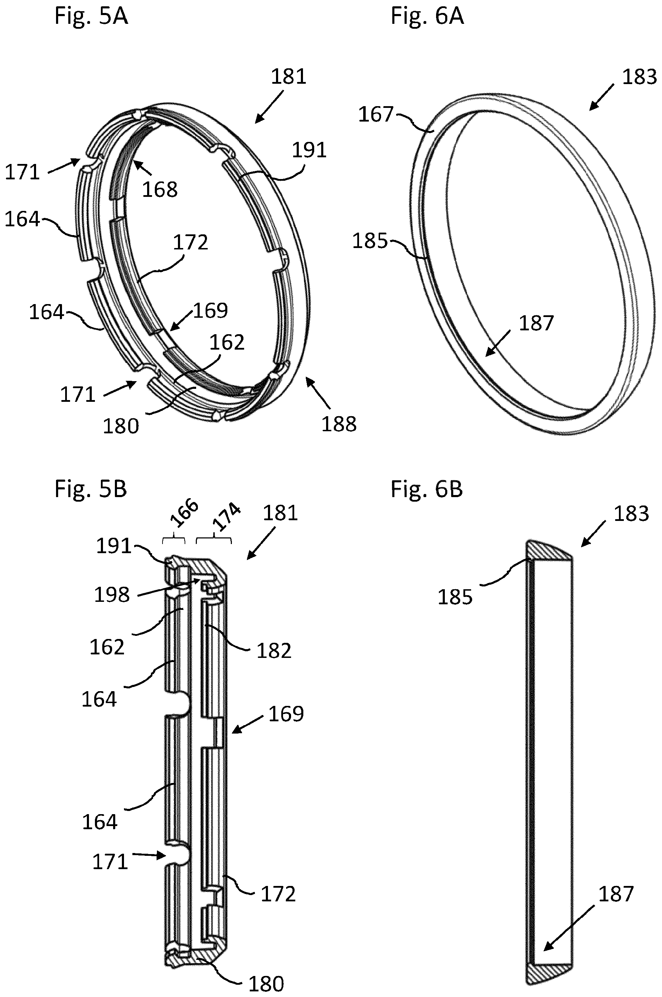

Among others, Figures 4, 5A and 5B show that a lip of the first clamp ring 181 is segmented by multiple gaps 171 into a total of eight snap elements 164. Each snap element 164 has on its inside surface, i.e., a surface facing the outside cylinder surface of the press sleeve 140, a protrusion, delimiting the groove 162 towards the front face of the stop ring 160 and forming an undercut. Generally, any number of snap elements 164 may be used, for example 2 to 8 snap element 164.

The combination of multiple snap elements 164 and intermediate gaps 171 result in a higher flexibility of the lip 161 during manufacturing of the clamping ring 181 and during assembly of the sleeve group 200. Accordingly, the distal part of the clamp ring 181 can be deformed easily to allow the individual snap elements 164 to glide over the collar 144 of the press sleeve 144 during insertion.

Moreover, a total of six snap hooks 172 are provided at the opposite, proximal end of the clamp ring 181, which are separated by six corresponding gaps 169. Of course, fewer or more snap elements 164 or snap hooks 172 may also be provided, for example 3 to 12 snap hooks 172 depending on the size of the clamp ring 181. In the described configuration, the snap elements 164 and the snap hooks 172 are not aligned with each other along the circumference of the clamp ring 181. In other embodiments this may be the case, in particular if the number of snap elements 164 equals the number of snap hooks 172. Although not shown, another mechanical connection, such as a form-fit connection, may be provided between the clamp ring 181 or another part of the stop ring 160 and the fitting body 120.

As can be best seen in Figure 5B, the clamp ring 181 can be divided into a first part 166 for accommodating the first end 146 of the press sleeve 140 and a second part 174 for attaching the stop ring 160 to the fitting body 120. These two parts 166 and 174 are separated by the groove 162 configured for accommodating the collar 144. The snap elements 164 are arranged in the first part 166, i.e., in the insertion direction *aᵢₙ,* in front of the groove 162. The snap hooks 172 are arranged in the second part 174, i.e., in the insertion direction *aᵢₙ,* behind the groove 162.

Figures 4, 5A and 5B also show further details of the second part 174 of the clamp ring 181, comprising the snap hooks 172. It comprises a base part 180, which forms the back wall of the groove. In the described embodiment, the base part 180 extends, in a direction towards the center of the ring 181, beyond the snap elements 164 and acts as circular stop rib or ring for the first collar 144. Instead of a single, circular stop rib or ring, multiple smaller stop ribs may be provided as an alternative.

In the described embodiment, the base part 180 also forms the base of the snap hooks 172. As best seen in the cross-section of Figure 5B, the material of each snap hook 172 forms a hook around a groove or depression 198 extending in the insertion direction *aᵢₙ,* i.e., orthogonal to the groove 162 for accommodating the first collar 144 of the press sleeve 140. Moreover, each snap hook 172 ends in a centering step 182, which positions the snap hook 172 on the protrusion 122 of the fitting body 120 as shown, for example, in Figure 1C.

Figures 5A and 5B also show that the clamp ring 181 has a locking step 191 on its outside edge oriented, in a mounted position, towards the press sleeve 140. The corresponding protrusion 185 on the inner contour 187 of the compression ring 183, which is configured for locking the compression ring 183 on the outer contour 188 of the clamp ring 181 of the in the assembled position of the stop ring 140, is shown in Figures 6A and 6B.

In an alternative embodiment not shown in the figures, the snap hooks 172 may form part of the compression ring 183. In this case, the compression ring 183 should be attached the clamp ring 181 with a connection strong enough to bear axial and lateral forces. This may be achived, for example, by the provision of a larger locking step 191 and corresponding protrusion 185, or by the provision of other coupling elements, such as clamp hooks or locking bolts.

Figures 7, 8A and 8B show details of a second clamp ring 181 of a second stop ring 160. Note that the compression ring 183 of the second stop ring 160 has essentially the same configuration as the compression ring 183 of the first stop ring 160 shown in Figures 6A and 6B and is not shown in detail again.

The second clamp ring 181 of the second stop ring 160 shown in Figures 7A and 7B differs from the first clamp ring 181 of Figures 5A and 5B in that its lip 161 forms a complete, undivided ring without any gaps. This will generally result in higher insertion and pull-out forces, and thus also in stronger mechanical connection between the press sleeve 140 and the stop ring 160. Otherwise, its components are similar to those of the first clamp ring 181 described above, and their description is omitted for brevity.

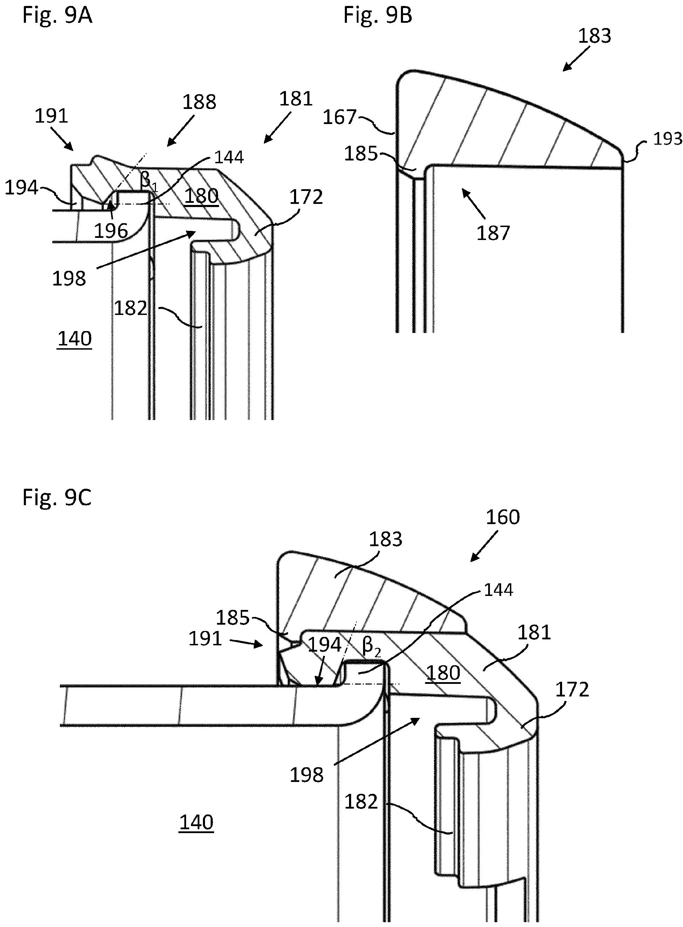

Figures 9A to 9C show a cross-section through a part of another two-part stop ring 160 before and after its assembly, which may be combined with each of the press fittings 100 previously described.

As can be seen best in Figure 9A, after inserting the collar 144 into the grove 162, a back surface 196 of a protrusion of the lip 161 has a recess angle β₁ of about 50°. This may correspond to a corresponding angle of a mold used to form the clamp ring 181, i.e., to its recess angle in the relaxed state. Note that the outer contour 188 of the clamp ring 181 according to this embodiment is curved outwards in this state. Both features reduce the insertion force required for pushing the collar 144 into the inner contour 168 of clamp ring 181.

Figure 9B shows a detail of the inner contour 187 of the compression ring 183. It shows in detail the shape of the protrusion 185, which forms an undercut for locking the compression ring 183 with a locking step 191 of the clamp ring 181. Moreover, it can be seen that the remaining inside surface of the compression ring 183 is conical. In particular, its inside diameter is slightly wider towards the protrusion 185 formed at the front face 167 than towards its opposite back face 193. In the described embodiment, it is undercut slightly by approximate 1° with respect to the axial direction a.

Figure 9C shows the stop ring 160 in the assembled state. It can be seen that the compression force exerted by pushing the compression ring 183 over the clamp ring 181 has bent down the lip 161 by about 20° towards the press sleeve 140. In the depicted configuration, a middle surface 194 of the protrusion is now horizontal and touches the outside cylinder surface of the press sleeve 140. Moreover, the back surface 196 now has an increased recess angle β₂ of about 70°. Together, the protrusion of the lip 161 and the groove 162 of the clamp sleeve 181 now provide a form-fit connection for the first end 146 of the press sleeve 140 with the widened collar 144. Note that it is no longer possible to remove the press sleeve 140 from the stop ring 160 without damaging it in this state. Note further that in this state the outer contour 188 of the clamp ring 181 is no longer curved, and touches essentially the entire inner contour 187 of the compression ring 183.

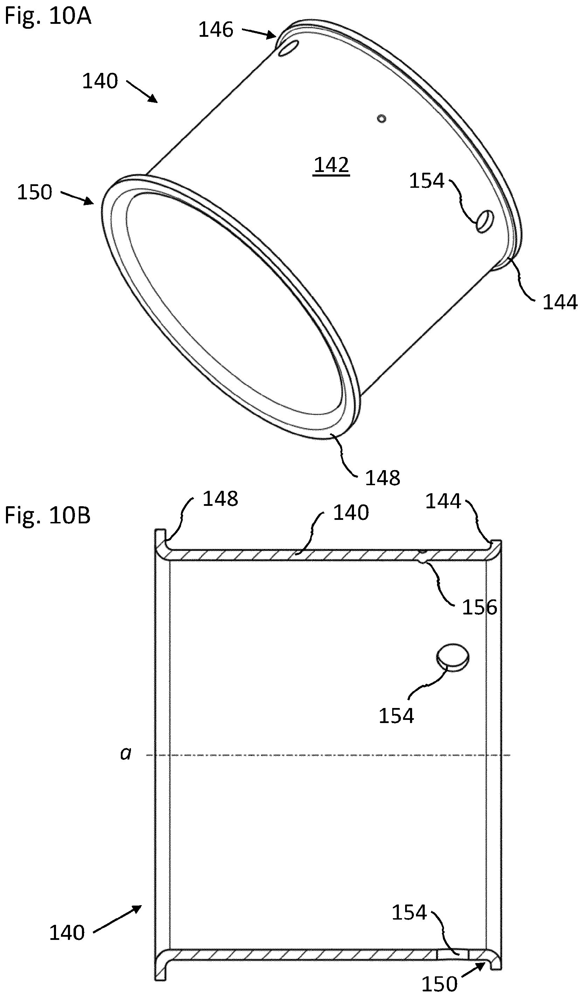

Figures 10A and 10B show different views of a press sleeve 140 according to another embodiment, which may be combined with each of the press fittings 100 previously described.

The press sleeve 140 according to Figures 10A and 10B comprises one or more inspection windows 154, which enable an installer to visually verify whether a pipe has been fully inserted into the press sleeve 140 of the sleeve group 200. Moreover, Figure 10B shows that at least one punch mark 156 has been formed by a corresponding punch tool in the pressing area 142. This punch mark 156 protruding on the inside surface of the press sleeve 140 helps to hold a pipe pushed into the press fitting 100 prior to the pressing of the press sleeve 140 with the corresponding press tool (not shown).

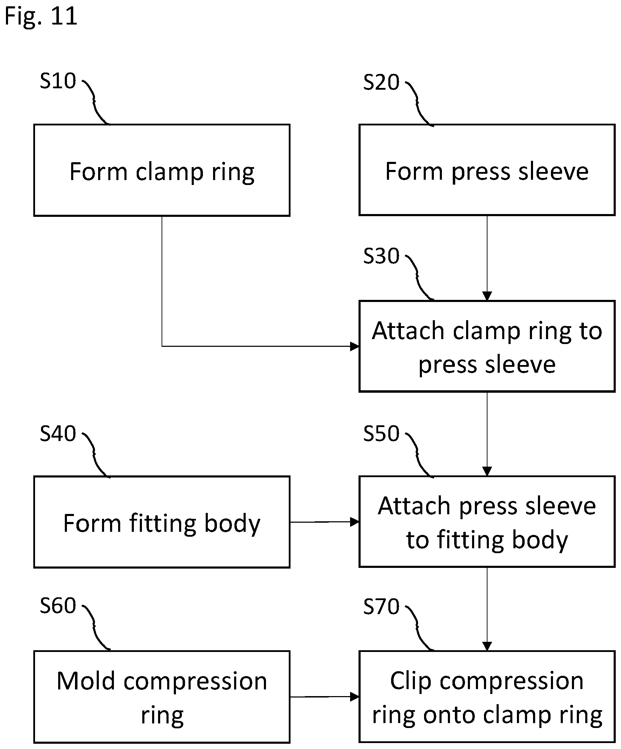

Figure 11 shows, in a schematic manner, a flowchart of a method for manufacturing a press fitting, such as any of the press fittings 100 described before.

In a step S10, a clamp ring 181 is formed. For example, a thermoplastic material such as Polyoxymethylene (POM) can be injected into a mold to form the clamp ring 181 by injection molding.

In a step S20, the press sleeve 140 is formed. For example, it may be formed by deep drawing a sheet of stainless steel into an essentially cylindrical shape. The collars 144 and/or 148 may be formed as a part of the deep drawing process, or may be formed later, for example by a widening procedure. Furthermore, after deep drawing of the cylinder shape, one end of the press sleeve 140 may be opened, for example by cutting. Optionally, one or more inspection windows 154 and/or one or more punch marks 156 may be formed by stamping or punching in an optional manufacturing step.

Thereafter, in a step S30, the clamp ring 181 is attached to the press sleeve 140 by inserted the press sleeve 140 with its first end 146 into the inner contour 168 of the clamp ring 181 (or vice versa). This may be performed, for example, by a pressing operation at an automatic assembly line. As discussed before, the presence of the lip 161 facilitates insertion of the first collar 144 into the groove 162 of the clamp ring 181 by reducing the required mounting force.

In a step S40, the fitting body 120 is formed. This may be performed in any appropriate manner as known from the prior art, for example by turning a brass cylinder or by molding a plastic material to form the fitting body 120.

In a step S50, the press sleeve 140 with the clamp ring 181 is attached to the fitting body 120 by pushing the proximal end of the press sleeve 140 over one end of the fitting body 120, until the snap hooks 172 of the clamp ring 181 snap into a corresponding groove 130 of the fitting body 120. This step may be performed, for example, by another pressing operation at an automatic assembly line.

In a step S60, the compression ring 183 is formed. This may be performed in similar manner as described above with respect to formation of the clamp ring 181 in step S10. However, instead of a pure plastic material, a composite material, such as a fiber-reinforced plastic material may be used to give it a higher tensile strength.

In a step S70, the compression ring 183 is placed over the clamp ring 181. For example, it may be clipped over its outer contour 188 as described before, thereby compressing at least the first part 166 of the clamp ring 181.

Note that the order of steps shown in Figure 11 is exemplary and is not meant to be limiting. For example, in case of a straight fitting body 120 with a relative narrow central part 124 as shown, for example, in Figure 1C, step S70 may be performed after the rest of a sleeve group has already been attached to the fitting body 120. In case the central part 124 or any other part of a fitting is wider than the clear diameter of the compression ring 183, the compression ring 183 may be placed over the fitting body 120 prior to attaching the press sleeve 140 to it. Moreover, in another embodiment, the stop ring 140 may be assembled earlier, e.g., by performing steps S60 and S70 before steps S40 and S50. That is to say, the sleeve group 200 may be fully assembled, including mounting the compression ring 183, before it is attached as a whole to the fitting body 120.

The present invention has been described above with respect to various embodiments as shown in the attached figures. Nonetheless, attention is drawn to the fact that the protective scope is not limited by the specific embodiments disclosed therein and is defined by the attached set of claims.

### Reference signs

- 100: press fitting
- 120: fitting body
- 122: protrusion
- 124: central area
- 126: pressing profile
- 128: recess
- 130: groove (of the fitting body)
- 132: sealing ring
- 140: press sleeve
- 142: press area
- 144: first collar
- 146: first end
- 148: flange (second collar)
- 150: second end
- 152: kink
- 154: inspection window
- 156: punch mark
- 160: stop ring
- 161: lip
- 162: groove (of the stop ring)
- 164: snap element
- 166: first part
- 167: front face
- 168: inner contour (of the clamp ring)
- 169: gap
- 171: gap
- 172: snap hook
- 174: second part
- 180: base part
- 181: clamp ring
- 182: centering step
- 183: compression ring
- 185: protrusion (of the compression ring)
- 187: inner contour (of the compression ring)
- 188: outer contour (of the clamp ring)
- 191: locking step
- 193: (back) face
- 194: middle surface
- 196: back surface
- 198: depression
- 200: sleeve group

- S10 to S70: manufacturing steps

## Claims

1. A press fitting (100) for a pipe connection, comprising:
- a fitting body (120) for connecting the press fitting (100) to a pipe;
- a press sleeve (140) comprising a substantially cylindrical press area (142) and an outward expanding first collar (144) at a first end (146) of the press sleeve (140); and
- a stop ring (160) interconnecting the press sleeve (140) and the fitting body (120), the stop ring (160) comprising:
- an inner clamp ring (181) having a groove (162) and a lip (161), the groove (162) being formed at an inner contour (168) of the clamp ring (181) and being configured for accommodating the outward expanding first collar (144) of the press sleeve (140), and the lip (161) being arranged, in an insertion direction (*aᵢₙ*) of the press sleeve (140), in a first part (166) of the clamp ring (181) in front of the groove (162); and
**characterised by** the stop ring (160)further comprising:
- a separate, outer compression ring (183), configured to compress the first part (166) of the clamp ring (181) in an assembled state of the stop ring, wherein the compression ring (183) is placed over an outer contour (188) of the clamp ring (181).

2. The press fitting (100) claim 1, wherein the compression ring (183) is configured to press the lip (161) of the clamp ring (181) against an outer surface of the press sleeve (140) for creating a form-fit connection between the first end (146) of the press sleeve (140) and the stop ring (160) in the assembled state.

3. The press fitting (100) according to claim 1 or 2, wherein the lip (161) comprises a first protrusion formed at the inner contour (168) of the clamp ring (181) and delimiting the groove (162) in the insertion direction (*aᵢₙ*) of the press sleeve (140) to form a first undercut.

4. The press fitting (100) according to claim 3, wherein at least one of:
- a recess angle (β) of the protrusion is increased when the compression ring (183) is placed over the outer contour (188) of the clamp ring (181);
- the recess angle (β₁) of the protrusion lies in the range of 40-60° prior to placing the compression ring (183) over the outer contour (188) of the clamp ring (181);
- the recess angle (β₂) of the protrusion lies in the range of 60-80° in the assembled state; and
- a depth of the undercut (171) lies in the range of 0.30 to 1.0 mm in the assembled state.

5. The press fitting (100) according to any one of claims 1 to 4, wherein the lip (161) forms at least one snap element (164) for creating a snap-fit connection between the outward expanding first collar (144) of the press sleeve (140) and the clamp ring (181) prior to placing the compression ring (183) over the outer contour (188) of the clamp ring (181).

6. The press fitting (100) according to claim 5, wherein the lip (161) is segmented in the circumferential direction by multiple first cut-outs into a plurality of snap elements (164).

7. The press fitting (100) according to any one of claims 1 to 6, wherein at least one of
- the outer contour (188) of the clamp ring (181) has a conical shape with a wider outside diameter in the area of a front face of the stop ring (160) facing the press sleeve (140) in the assembled state; and
- an inner contour (187) of the compression ring (183) has a conical shape with a wider inside diameter in the area of the front face of the stop ring (160).

8. The press fitting (100) according to any one of claims 1 to 7, wherein the compression ring (183) further comprises a protrusion (185) for forming a second undercut, the protrusion (185) being configured lock the compression ring (183) at the outer contour (188) of the clamp ring (181) in the assembled state.

9. The press fitting (100) according to any one of claims 1 to 8, wherein the stop ring (160) further comprises one or more snaps hooks (172), in particular one or more snaps hooks (172) formed in a second part (174) of the clamp ring (181), the one or more snap hooks (172) being configured to connect the clamp ring (181) to a corresponding protrusion (122) of the fitting body (120).

10. The press fitting (100) according to claim 9, wherein at least one of:
- a second part (174) of the clamp ring (181) is segmented in the circumferential direction by multiple second cut-outs into a plurality of snap hooks (172); and
- the one or more snap hooks (172) comprise a centering step (182) for positioning the stop ring (160) on the fitting body (120).

11. The press fitting (100) according to any one of claims 1 to 10, wherein at least one of:
- the outward expanding first collar (144) of the press sleeve (140) is configured as a flange;
- the outward expanding first collar (144) of the press sleeve (140) has an opening angle in the range of 60 to 90°; and
- a radius of a kink (152) or bend between the substantially cylindrical press area (142) and the outward expanding first collar (144) lies in the range of 0.5 to 1.0 mm.

12. The press fitting (100) according to any one of claims 1 to 11, wherein the press sleeve (140) further comprises at least one of:
- an inspection window (154) formed in the substantially cylindrical press area (142) and configured for visually inspecting the insertion of a pipe into the press-fitting (100);
- a punch mark (156) formed in the substantially cylindrical press area (142) and configured for fixing a pipe inserted into the press-fitting (100) prior to pressing the press sleeve (140); and
- an outward expanding second collar, in particular a flange (148), formed at a second end (150) of the press sleeve (140), the second collar (148) being configured for guiding a pressing jaw of a tool for pressing the press sleeve (140).

13. The press fitting (100) according to any one of claims 1 to 12, wherein at least one of:
- the clamp ring (181) is made from a first plastic material, in particular a thermoplastic material;
- the compression ring (183) is made from a second plastic material, in particular a fiber reinforced plastic material;
- the press sleeve (140) is made from a metal material, in particular stainless steel; and
- the fitting body (120) is made from a metal or plastic material, in particular brass or polyphenylsulfone, PPSU.

14. A manufacturing method, comprising:
- inserting a first end (146) of a press sleeve (140) of a press fitting (100) into an inner contour (168) of a clamp ring (181) to form a snap-fit connection around the first end (146) of the press sleeve (140), wherein the press sleeve (140) comprises a substantially cylindrical press area (142) and an outward expanding first collar (144) arranged at the first end (146), and wherein the clamp ring (181) has a groove (162) for accommodating the outward expanding first collar (144) and a lip (161) arranged, in an insertion direction (*aᵢₙ*) of the press sleeve (140), in a first part (166) of the clamp ring (181) in front of the groove (162); and **characterised by**
- placing a separate compression ring (183) over an outer contour (188) of the clamp ring (181) to compress the first part (166) of the clamp ring (181).

15. The manufacturing method of claim 14, further comprising:
- attaching the press sleeve (140) to a fitting body (120) of the press-fitting (100), wherein, during the attaching, one or more flexible hooks (172) of the clamp ring (181) snap-fit around a protrusion (122) of the fitting body (120), wherein the step of attaching is performed prior or after placing the separate compression ring (183) over the outer contour (188) of the clamp ring (181).

## Patentansprüche

1. Pressfitting (100) für eine Rohrverbindung, umfassend:
- einen Fittingkörper (120) zum Verbinden des Pressfittings (100) mit einem Rohr;
- eine Presshülse (140), die einen im Wesentlichen zylindrischen Pressbereich (142) und einen sich nach außen erweiternden ersten Bund (144) an einem ersten Ende (146) der Presshülse (140) umfasst; und
- einen Anschlagring (160), der die Presshülse (140) und den Fittingkörper (120) miteinander verbindet, wobei der Anschlagring (160) Folgendes umfasst:
- einen inneren Klemmring (181) mit einer Nut (162) und einer Lippe (161), wobei die Nut (162) an einer Innenkontur (168) des Klemmrings (181) gebildet und zum Aufnehmen des sich nach außen erweiternden ersten Bunds (144) der Presshülse (140) ausgelegt ist, und die Lippe (161) in einer Einsetzrichtung (*aᵢₙ*) der Presshülse (140) in einem ersten Teil (166) des Klemmrings (181) vor der Nut (162) angeordnet ist; und **dadurch gekennzeichnet, dass** der Anschlagring (160) ferner Folgendes umfasst:
- einen getrennten, äußeren Druckring (183), der dazu ausgelegt ist, den ersten Teil (166) des Klemmrings (181) in einem montierten Zustand des Anschlagrings zusammenzudrücken, wobei der Druckring (183) über einer Außenkontur (188) des Klemmrings (181) platziert ist.

2. Pressfitting (100) nach Anspruch 1, wobei der Druckring (183) dazu ausgelegt ist, die Lippe (161) des Klemmrings (181) zum Herstellen einer formschlüssigen Verbindung zwischen dem ersten Ende (146) der Presshülse (140) und dem Anschlagring (160) im montierten Zustand gegen eine Außenfläche der Presshülse (140) zu drücken.

3. Pressfitting (100) nach Anspruch 1 oder 2, wobei die Lippe (161) einen ersten Vorsprung umfasst, der an der Innenkontur (168) des Klemmrings (181) gebildet ist und die Nut (162) in der Einsetzrichtung (*aᵢₙ*) der Presshülse (140) begrenzt, um eine erste Hinterschneidung zu bilden.

4. Pressfitting (100) nach Anspruch 3, wobei mindestens eines von Folgendem gilt:
- ein Aussparungswinkel (β) des Vorsprungs ist erhöht, wenn der Druckring (183) über der Außenkontur (188) des Klemmrings (181) platziert ist;
- der Aussparungswinkel (β1) des Vorsprungs liegt vor Platzieren des Druckrings (183) über der Außenkontur (188) des Klemmrings (181) im Bereich von 40-60°;
- der Aussparungswinkel (β2) des Vorsprungs liegt im montierten Zustand im Bereich von 60-80°; und
- eine Tiefe der Hinterschneidung (171) liegt im montierten Zustand im Bereich von 0,30 bis 1,0 mm.

5. Pressfitting (100) nach einem der Ansprüche 1 bis 4, wobei die Lippe (161) mindestens ein Schnappelement (164) zum Herstellen einer Schnappverbindung zwischen dem sich nach außen erweiternden ersten Bund (144) der Presshülse (140) und dem Klemmring (181) vor Platzieren des Druckrings (183) über der Außenkontur (188) des Klemmrings (181) bildet.

6. Pressfitting (100) nach Anspruch 5, wobei die Lippe (161) in der Umfangsrichtung durch mehrere erste Ausschnitte in eine Mehrzahl von Schnappelementen (164) segmentiert ist.

7. Pressfitting (100) nach einem der Ansprüche 1 bis 6, wobei mindestens eines von Folgendem gilt
- die Außenkontur (188) des Klemmrings (181) weist eine konische Form mit einem breiteren Außendurchmesser im Bereich einer vorderen Fläche des Anschlagrings (160) auf, die im montierten Zustand der Presshülse (140) zugewandt ist; und
- eine Innenkontur (187) des Druckrings (183) weist eine konische Form mit einem breiteren Innendurchmesser im Bereich der vorderen Fläche des Anschlagrings (160) auf.

8. Pressfitting (100) nach einem der Ansprüche 1 bis 7, wobei der Druckring (183) ferner einen Vorsprung (185) zum Bilden einer zweiten Hinterschneidung umfasst, wobei der Vorsprung (185) dazu ausgelegt ist, den Druckring (183) im montierten Zustand an der Außenkontur (188) des Klemmrings (181) zu verrasten.

9. Pressfitting (100) nach einem der Ansprüche 1 bis 8, wobei der Anschlagring (160) ferner einen oder mehrere Schnapphaken (172), insbesondere einen oder mehrere Schnapphaken (172), die in einem zweiten Teil (174) des Klemmrings (181) gebildet sind, umfasst, wobei der eine oder die mehreren Schnapphaken (172) dazu ausgelegt sind, den Klemmring (181) mit einem entsprechenden Vorsprung (122) des Fittingkörpers (120) zu verbinden.

10. Pressfitting (100) nach Anspruch 9, wobei mindestens eines von Folgendem gilt:
- ein zweiter Teil (174) des Klemmrings (181) ist in der Umfangsrichtung durch mehrere zweite Ausschnitte in eine Mehrzahl von Schnapphaken (172) segmentiert; und
- der eine oder die mehreren Schnapphaken (172) umfassen eine Zentrierstufe (182) zum Positionieren des Anschlagrings (160) auf dem Fittingkörper (120).

11. Pressfitting (100) nach einem der Ansprüche 1 bis 10, wobei mindestens eines von Folgendem gilt:
- der sich nach außen erweiternde erste Bund (144) der Presshülse (140) ist als ein Flansch ausgelegt;
- der sich nach außen erweiternde erste Bund (144) der Presshülse (140) weist einen Öffnungswinkel im Bereich von 60 bis 90° auf; und
- ein Radius einer Knickstelle (152) oder Biegung zwischen dem im Wesentlichen zylindrischen Pressbereich (142) und dem sich nach außen erweiternden ersten Bund (144) liegt im Bereich von 0,5 bis 1,0 mm.

12. Pressfitting (100) nach einem der Ansprüche 1 bis 11, wobei die Presshülse (140) ferner mindestens eines von Folgendem umfasst:
- ein Sichtfenster (154), das in dem im Wesentlichen zylindrischen Pressbereich (142) gebildet und zur Sichtprüfung des Einsetzens eines Rohrs in das Pressfitting (100) ausgelegt ist;
- eine Körnermarke (156), die in dem im Wesentlichen zylindrischen Pressbereich (142) gebildet und zum Fixieren eines in das Pressfitting (100) eingesetzten Rohrs vor Verpressen der Presshülse (140) ausgelegt ist; und
- einen sich nach außen erweiternden zweiten Bund, insbesondere einen Flansch (148), der an einem zweiten Ende (150) der Presshülse (140) gebildet ist, wobei der zweite Bund (148) zum Führen einer Pressbacke eines Werkzeugs zum Verpressen der Presshülse (140) ausgelegt ist.

13. Pressfitting (100) nach einem der Ansprüche 1 bis 12, wobei mindestens eines von Folgendem gilt:
- der Klemmring (181) besteht aus einem ersten Kunststoffmaterial, insbesondere einem thermoplastischen Material;
- der Druckring (183) besteht aus einem zweiten Kunststoffmaterial, insbesondere einem faserverstärkten Kunststoffmaterial;
- die Presshülse (140) besteht aus einem Metallmaterial, insbesondere rostfreiem Stahl; und
- der Fittingkörper (120) besteht aus einem Metall- oder Kunststoffmaterial, insbesondere Messing oder Polyphenylsulfon, PPSU.

14. Herstellungsverfahren, umfassend:
- Einsetzen eines ersten Endes (146) einer Presshülse (140) eines Pressfittings (100) in eine Innenkontur (168) eines Klemmrings (181), um eine Schnappverbindung um das erste Ende (146) der Presshülse (140) zu bilden, wobei die Presshülse (140) einen im Wesentlichen zylindrischen Pressbereich (142) und einen sich nach außen erweiternden ersten Bund (144) umfasst, der an dem ersten Ende (146) angeordnet ist, und wobei der Klemmring (181) eine Nut (162) zum Aufnehmen des sich nach außen erweiternden ersten Bunds (144) und eine Lippe (161) umfasst, die in einer Einsetzrichtung (*aᵢₙ*) der Presshülse (140) in einem ersten Teil (166) des Klemmrings (181) vor der Nut (162) angeordnet ist; und **gekennzeichnet durch**
- Platzieren eines getrennten Druckrings (183) über einer Außenkontur (188) des Klemmrings (181), um den ersten Teil (166) des Klemmrings (181) zusammenzudrücken.

15. Herstellungsverfahren nach Anspruch 14, ferner umfassend:
- Anbringen der Presshülse (140) an einem Fittingkörper (120) des Pressfittings (100), wobei während des Anbringens ein oder mehrere flexible Haken (172) des Klemmrings (181) um einen Vorsprung (122) des Fittingkörpers (120) einschnappen, wobei der Schritt zum Anbringen vor oder nach Platzieren des getrennten Druckrings (183) über der Außenkontur (188) des Klemmrings (181) durchgeführt wird.

## Revendications

1. Raccord à pression (100) pour le raccordement de tuyaux, comprenant :
- un corps de raccord (120) servant à raccorder le raccord à pression (100) à un tuyau ;
- un manchon de pression (140) comprenant une zone de pression (142) sensiblement cylindrique et une première collerette (144) s'étendant vers l'extérieur à une première extrémité (146) du manchon de pression (140) ; et
- une bague d'arrêt (160) raccordant le manchon de pression (140) et le corps de raccord (120) l'un à l'autre, la bague d'arrêt (160) comprenant :
- une bague de serrage intérieure (181) présentant une gorge (162) et une lèvre (161), la gorge (162) étant formée sur un contour intérieur (168) de la bague de serrage (181) et étant conçue pour recevoir la première collerette (144) s'étendant vers l'extérieur du manchon de pression (140), et la lèvre (161) étant placée, dans une direction d'insertion (aᵢₙ) du manchon de pression (140), dans une première partie (166) de la bague de serrage (181) en avant de la gorge (162) ; et **caractérisé en ce que** la bague d'arrêt (160) comprend en outre :
- une bague de compression extérieure (183) distincte, conçue pour comprimer la première partie (166) de la bague de serrage (181) dans un état assemblé de la bague d'arrêt, la bague de compression (183) étant placée sur un contour extérieur (188) de la bague de serrage (181).

2. Raccord à pression (100) selon la revendication 1, dans lequel la bague de compression (183) est conçue pour presser la lèvre (161) de la bague de serrage (181) contre une surface extérieure du manchon de pression (140) pour créer un accouplement géométrique entre la première extrémité (146) du manchon de pression (140) et la bague d'arrêt (160) dans l'état assemblé.

3. Raccord à pression (100) selon la revendication 1 ou 2, dans lequel la lèvre (161) comprend une première saillie formée au niveau du contour intérieur (168) de la bague de serrage (181) et délimitant la gorge (162) dans la direction d'insertion (aᵢₙ) du manchon de pression (140) pour former une première partie en retrait.

4. Raccord à pression (100) selon la revendication 3, dans lequel :
- un angle de renfoncement (β) de la saillie est augmenté lorsque la bague de compression (183) est placée sur le contour extérieur (188) de la bague de serrage (181) ;
- l'angle de renfoncement (β₁) de la saillie est compris dans la plage de 40 à 60° avant de placer la bague de compression (183) sur le contour extérieur (188) de la bague de serrage (181) ;
- l'angle de renfoncement (β₂) de la saillie est compris dans la plage de 60 à 80° dans l'état assemblé ; et/ou
- une profondeur de la partie en retrait (171) est comprise entre 0,30 et 1,0 mm dans l'état assemblé.

5. Raccord à pression (100) selon l'une quelconque des revendications 1 à 4, dans lequel la lèvre (161) forme au moins un élément d'emboîtement-pression (164) pour créer un accouplement par emboîtement-pression entre la première collerette (144) s'étendant vers l'extérieur du manchon de pression (140) et la bague de serrage (181) avant de placer la bague de compression (183) sur le contour extérieur (188) de la bague de serrage (181).

6. Raccord à pression (100) selon la revendication 5, dans lequel la lèvre (161) est segmentée dans la direction circonférentielle par de multiples premières encoches de façon à former une pluralité d'éléments d'emboîtement-pression (164).

7. Raccord à pression (100) selon l'une quelconque des revendications 1 à 6, dans lequel
- le contour extérieur (188) de la bague de serrage (181) présente une forme conique avec un diamètre extérieur plus large au niveau d'une face avant de la bague d'arrêt (160) orientée vers le manchon de pression (140) dans l'état assemblé ; et/ou
- un contour intérieur (187) de la bague de compression (183) présente une forme conique avec un diamètre intérieur plus large au niveau de la face avant de la bague d'arrêt (160).

8. Raccord à pression (100) selon l'une quelconque des revendications 1 à 7, dans lequel la bague de compression (183) comprend en outre une saillie (185) pour former une seconde partie en retrait, la saillie (185) étant conçue pour bloquer la bague de compression (183) au niveau du contour extérieur (188) de la bague de serrage (181) dans l'état assemblé.

9. Raccord à pression (100) selon l'une quelconque des revendications 1 à 8, dans lequel la bague d'arrêt (160) comprend en outre un ou plusieurs crochets d'emboîtement-pression (172), en particulier un ou plusieurs crochets d'emboîtement-pression (172) formés dans une seconde partie (174) de la bague de serrage (181), le ou les crochets d'emboîtement-pression (172) étant conçus pour raccorder la bague de serrage (181) à une saillie correspondante (122) du corps de raccord (120).

10. Raccord à pression (100) selon la revendication 9, dans lequel :
- une seconde partie (174) de la bague de serrage (181) est segmentée dans la direction circonférentielle par de multiples secondes encoches de façon à former une pluralité de crochets d'emboîtement-pression (172) ; et/ou
- le ou les crochets d'emboîtement-pression (172) comportent un épaulement de centrage (182) pour le positionnement de la bague d'arrêt (160) sur le corps de raccord (120).

11. Raccord à pression (100) selon l'une quelconque des revendications 1 à 10, dans lequel :
- la première collerette (144) s'étendant vers l'extérieur du manchon de pression (140) est réalisée sous la forme d'un rebord ;
- la première collerette (144) s'étendant vers l'extérieur du manchon de pression (140) présente un angle d'ouverture compris entre 60 et 90° ; et/ou
- un rayon d'un pli (152) ou d'une courbure entre la zone de pression (142) sensiblement cylindrique et la première collerette (144) s'étendant vers l'extérieur est compris entre 0,5 et 1,0 mm.

12. Raccord à pression (100) selon l'une quelconque des revendications 1 à 11, dans lequel le manchon de pression (140) comprend en outre :
- une fenêtre d'inspection (154) formée dans la zone de pression (142) sensiblement cylindrique et conçue pour contrôler visuellement l'insertion d'un tuyau dans le raccord à pression (100) ;
- une marque de poinçon (156) formée dans la zone de pression (142) sensiblement cylindrique et conçue pour fixer un tuyau inséré dans le raccord à pression (100) avant de presser le manchon de pression (140) ; et/ou
- une seconde collerette s'étendant vers l'extérieur, en particulier un rebord (148), formée à une seconde extrémité (150) du manchon de pression (140), la seconde collerette (148) étant conçue pour guider une mâchoire de pression d'un outil servant à presser le manchon de pression (140).

13. Raccord à pression (100) selon l'une quelconque des revendications 1 à 12, dans lequel :
- la bague de serrage (181) est réalisée à partir d'une première matière plastique, notamment une matière thermoplastique ;
- la bague de compression (183) est réalisée à partir d'une seconde matière plastique, notamment une matière plastique renforcée de fibres ;
- le manchon de pression (140) est réalisé à partir d'un matériau métallique, notamment en acier inoxydable ; et/ou
- le corps de raccord (120) est réalisé à partir d'un matériau métallique ou d'une matière plastique, notamment du laiton ou une poly(phénylène sulfone), PPSU.

14. Procédé de fabrication, comprenant :
- insérer une première extrémité (146) d'un manchon de pression (140) d'un raccord à pression (100) dans un contour intérieur (168) d'une bague de serrage (181) pour former un accouplement par emboîtement-pression autour de la première extrémité (146) du manchon de pression (140), le manchon de pression (140) comprenant une zone de pression (142) sensiblement cylindrique et une première collerette (144) s'étendant vers l'extérieur placée au niveau de la première extrémité (146), et la bague de serrage (181) présentant une gorge (162) destinée à recevoir la première collerette (144) s'étendant vers l'extérieur et une lèvre (161) placée, dans une direction d'insertion (ain) du manchon de pression (140), dans une première partie (166) de la bague de serrage (181) en avant de la gorge (162) ; et **caractérisé par** l'étape consistant à
- placer une bague de compression (183) distincte sur un contour extérieur (188) de la bague de serrage (181) pour comprimer la première partie (166) de la bague de serrage (181).

15. Procédé de fabrication selon la revendication 14, comprenant en outre :
- fixer le manchon de pression (140) sur un corps de raccord (120) du raccord à pression (100), un ou plusieurs crochets flexibles (172) de la bague de serrage (181) s'adaptant par emboîtement-pression, lors de la fixation, autour d'une saillie (122) du corps de raccord (120), l'étape de fixation étant réalisée avant ou après l'étape consistant à placer la bague de compression (183) distincte sur le contour extérieur (188) de la bague de serrage (181).
